# EUROPEAN PATENT APPLICATION

(11) **EP 1 775 489 A2**
(43) Date of publication of application: **18.04.2007**
(21) Application number: 06076351.3
(22) Date of filing: 03.07.2006
(51) Int. Cl.: F16C 33/58

(54) **Vented bearing assembly**

(30) Priority: 17.10.2005 US 727594 P
(71) Applicant: Rexnord Industries, Inc., Milwaukee, WI 53214 (US)
(72) Inventor: Williams, Steven S., Naperville, IL 60540 (US); Kuzniar, Frank J., Carlsbad, CA 92009 (US)
(74) Representative: van Loon, C.J.J.

(57) **Abstract**

A vented bearing assembly suitable for use in application having a pressure differential across the bearing assembly includes an inner ring member and an outer ring member. The outer ring member encircles the inner ring member, such that outer ring member and inner ring member define a raceway therebetween. A plurality of rollers are disposed in the raceway which allow relative movement of the ring members. A vent provides a passageway bypassing the raceway and forming a path for contaminants past the raceway.

## Description

### BACKGROUND OF THE INVENTION

The field of invention is roller bearings, and more particularly, to a vented roller bearing assembly suitable for in an application having a pressure differential across the bearing assembly.

Bearing assemblies are often used in applications, such as air pressurized systems, aircraft components, and the like, in which a pressure differential exists across the bearing assembly. The pressure differential can force airborne contaminants past seals and into the interior of the bearing assembly onto rollers captured between an inner and outer ring member in a raceway. The contaminants can foul the bearing assembly causing premature failure. A need exists for an improved bearing assembly which minimizes this problem.

### BRIEF SUMMARY OF THE INVENTION

The present invention provides a vented bearing assembly according to claim 1. The bearing assembly is suitable for use in application having a pressure differential across the bearing assembly. The bearing assembly may include an inner ring member and an outer ring member. The outer ring member encircles the inner ring member, such that outer ring member and inner ring member define a raceway therebetween. A plurality of rollers are disposed in the raceway which allow relative movement of the ring members. A vent provides a passageway bypassing the raceway to provide a path for contaminants past the raceway.

A general objective of the present invention is to minimize contaminants forced into the bearing assembly by a pressure differential across the bearing assembly which can cause premature failure of the bearing assembly. This objective is accomplished by providing a vent bypassing the raceway to provide a path for contaminants past the raceway. Further advantageous embodiments are defined in the dependent claims.

The foregoing and other advantages of the invention will appear from the following description. In the description, reference is made to the accompanying drawings which form a part hereof, and in which there is shown by way of illustration a preferred embodiment of the invention.

### BRIEF DESCRIPTION OF THE DRAWINGS

Fig. 1 is an axial elevational view of a bearing assembly incorporating the present invention;
Fig. 2 is a radial view of the bearing assembly of Fig. 1;
Fig. 3 is an axial elevational view of a second embodiment of a bearing assembly incorporating the present invention;
Fig. 4 is a radial view of the bearing assembly of Fig. 3;
Fig. 5 is an axial elevational view of a third embodiment of a bearing assembly incorporating the present invention;
Fig. 6 is a radial view of the bearing assembly of Fig. 5;
Fig. 7 is an axial elevational view of a fourth embodiment of a bearing assembly incorporating the present invention;
Fig. 8 is a radial view of the bearing assembly of Fig. 7;
Fig. 9 is an axial elevational view of a fifth embodiment of a bearing assembly incorporating the present invention;
Fig. 10 is a radial view of the bearing assembly of Fig. 9;
Fig. 11 is an axial elevational view of a sixth embodiment of a bearing assembly incorporating the present invention; and
Fig. 12 is a radial view of the bearing assembly of Fig. 11.

### DETAILED DESCRIPTION OF THE PREFERRED EMBODIMENTS

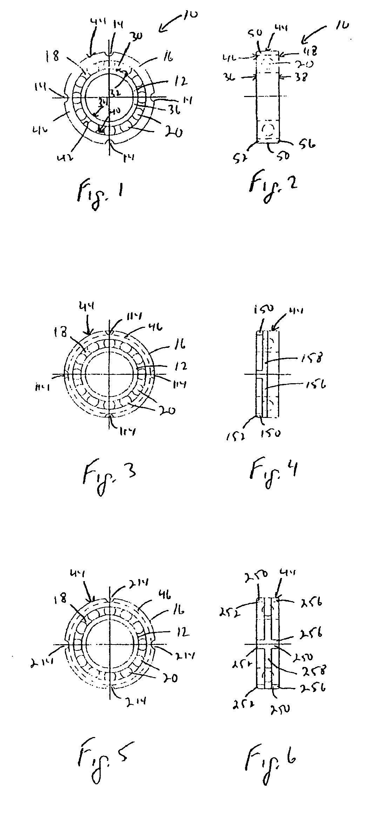

A vented bearing assembly 10 suitable for use in an application having a pressure differential across the bearing assembly is disclosed in the embodiments shown in Figs. 1-12. With the exception of vents 14, 114, 214, 314, 414, 514 described below, the bearing assembly 10 is of conventional construction having an annular outer race, or outer ring member 16, encircling an annular inner race, or inner ring member 12. The inner and outer ring members 12, 16 define a raceway 18 therebetween which receives a plurality of rollers 20 disposed in the raceway 18. The rollers 20 allow rotational movement of the inner and outer ring members 12, 16 relative to each other.

The annular inner ring member 12 includes an outer diameter surface 30 and an inner diameter surface 34. The outer diameter surface 30 forms a radially outwardly facing bearing race surface 32 for engagement with the rollers 20. Opposing axial facing faces 36, 38 join the inner and outer diameter surfaces 34, 30 of the inner ring member 12.

The annular outer ring member 16 encircles the inner ring member 12 defining the raceway 18 therebetween and includes an inner diameter surface 40 and an outer diameter surface 44. The inner diameter surface 40 forms a radially inner bearing race surface 42 for engagement with the rollers 20. Opposing axial faces 46, 48 join the inner and outer diameter surfaces 44, 40 of the outer ring member 16.

The plurality of rollers 20 are disposed in a single row in the raceway 18 between the inner and outer ring members 12, 16. Although a single row of spherical rollers 20, or ball bearings, are shown in the embodiments disclosed herein, the rollers 20 can have any conventional shape, such as any type of ball bearings, cylindrical roller bearings, spherical roller bearings, and tapered roller bearings, and the like, arranged in one or more rows without departing from the scope of the invention.

The bearing assembly 10 can be assembled by slipping the rollers 20 into the raceway 18 between the inner and outer ring members 12,16. As is known in the art, radially extending flanges (not shown) or collars (not shown) can be provided to capture the rollers 20 in the raceway 18. Seals, mounting hardware, and other bearing assembly components can also be provided as required for the particular application as is known in art.

In the embodiment shown in Figs. 1 and 2, the vents 14 are formed in the outer ring member 16 and provide passageways 50 bypassing the raceway 18 and forming a path for contaminants past the raceway 18 across the pressure differential. The vents 14 disclosed in Figs. 1 and 2 are channels, or grooves, formed in the outer diameter surface 44 of the outer ring member 16. The vents 14 extend axially past the raceway 18, and include an inlet 52 opening to one face 46 of the outer ring member 16 and an outlet 56 opening to the opposing face 48 of the outer ring member 16.

In the embodiment shown in Figs. 3 and 4, the vents 114 are formed in the outer diameter surface 44 of the outer ring member 16 and provide passageways 150 bypassing the raceway 18 and forming a path for contaminants past the raceway 18. The 114 vents disclosed in Figs. 3 and 4 are channels, or grooves formed in the outer diameter surface 44 of the outer ring member 16. The vents 114 include an inlet 152 opening to one face 46 of the outer ring member 16 and extend axially to intersect a circumferential channel 158, or groove, formed in the outer diameter surface 44 of the outer ring member 16. The circumferential channel 158 opens radially outwardly to provide an outlet 156 opening to the outer diameter surface 44 of the outer ring member 16.

In the embodiment shown in Figs. 5 and 6, vents 214 formed in the outer diameter surface 44 of the outer ring member 16 provide passageways 250 bypassing the raceway 18 and forming a path for contaminants past the raceway 18. The vents 214 disclosed in Figs. 5 and 6 are channels, or grooves, formed in the outer diameter surface 44 of the outer ring member 16. The vents 214 extend axially past the raceway 18 and include an inlet 252 opening to one face 46 of the outer ring member 16 and an outlet 256 opening to the opposing face 48 of the outer ring member 16. The axially extending vents 214 intersect a circumferential channel 258, or groove, formed in the outer diameter surface 44 of the outer ring member 16 substantially midway between the opposing faces 46, 48 of the outer ring member 16. The circumferential channel 258 opens radially outwardly to provide an additional outlet which opens to the outer diameter surface 44 of the outer ring member 16.

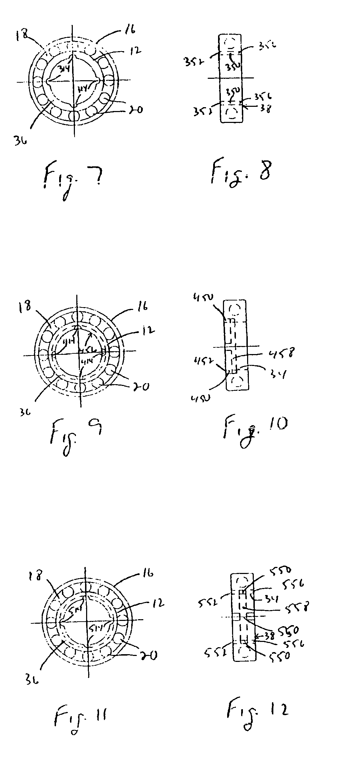

In the embodiment shown in Figs. 7 and 8, the vents 314 are formed in the inner ring member 12 and provide passageway 350 bypassing the raceway 18 and forming a path for contaminants past the raceway 18. The vents 314 disclosed in Figs. 7 and 8 are channels, or grooves formed in the inner diameter surface 34 of the inner ring member 12. The vents 314 extend axially past the raceway 18, and include an inlet 352 opening to one face 36 of the inner ring member 12 and an outlet 356 opening to the opposing face 38 of the inner ring member 12.

In the embodiment shown in Figs. 9 and 10, the vents 414 are formed in the inner diameter surface 34 of the inner ring member 12 and provide passageways 450 bypassing the raceway 18 and forming a path for contaminants past the raceway 18. The vents 414 disclosed in Figs. 9 and 10 are channels, or grooves, formed in the inner diameter surface 34 of the inner ring member 12. The vents 414 include an inlet 452 opening to one face 36 of the inner ring member 12 and extend axially to intersect a circumferential channel 458, or groove, formed in the inner diameter surface 34 of the inner ring member 12. The circumferential channel 458 opens radially inwardly to provide an outlet 456 opening to the inner diameter surface 34 of the inner ring member 12.

In the embodiment shown in Figs. 11 and 12, the vents 514 are formed in the inner diameter surface 34 of the inner ring member 12 and provide passageways 550 bypassing the raceway 18 and forming a path for contaminants past the raceway 18. The vents 514 disclosed in Figs. 11 and 12 are channels, or grooves, formed in the inner diameter surface 34 of the inner ring member 12. The vents 514 extend axially past the raceway 18, and include an inlet 552 opening to one face 36 of the inner ring member 12 and an outlet 556 opening to the opposing face 38 of the inner ring member 12. The axially extending vents 514 intersect a circumferential channel 558, or groove, formed in the inner diameter surface 34 of the inner ring member 12 substantially midway between the opposing faces 36, 38 of the inner ring member 12. The circumferential channel 58 opens radially inwardly to provide an additional outlet which opens to the inner diameter surface 34 of the inner ring member 12.

Advantageously, the vents 14, 114, 214, 314, 414, 514 disclosed above provide a path of least resistance for the contaminants impinging on the bearing assembly 10 as a result of a pressure differential across the raceway 18 of the bearing assembly. Preferably, the vents 14, 114, 214, 314, 414, 514 are formed in the inner and/or outer ring member 12, 16 of the bearing assembly 10, as described above. However, vents can be formed through other components of the bearing assembly, such as a bearing housing, without departing from the scope of the invention. The choice of outlet location depends upon the desired path of the air flow carrying the contaminants. The quantity and size of the vents are dependent upon the particular amount of expected air flow through the vents which varies depending upon the application. Accordingly, one or more vents of any size can be provided without departing from the scope of the invention. Moreover, the vents can be symmetrical or asymmetrical, and the channels can be curved or angled, as opposed to parallel or perpendicular to the bearing assembly centerlines without departing from the scope of the invention.

While there have been shown and described what is at present considered the preferred embodiments of the invention, it will be obvious to those skilled in the art that various changes and modifications can be made therein without departing from the scope of the invention defined by the appended claims. For example, although vents in the form of channels formed in a surface of the outer and/or inner ring members are disclosed, the vents can be throughholes formed through the outer and/or inner ring member without departing from the scope of the invention.

## Claims

1. A vented bearing assembly comprising:
a raceway defined between ring members;
a plurality of rollers disposed in said raceway; and
a vent providing a passageway bypassing said raceway and forming a path for contaminants past said raceway.

2. The bearing assembly as in claim 1, wherein:
the vent is formed in at least a portion of at least one of said ring members.

3. The bearing assembly as in claim 2, in which at least one of said ring members includes a first axially facing face, and said vent includes a first opening open to said first axially facing face.

4. The bearing assembly as in claim 3, in which said vent includes a second opening open to a second axially facing face facing away from said first axially facing face.

5. The bearing assembly as in claim 3, in which said vent includes a second opening open to one of an inner diameter of one of said ring members and an outer diameter surface of the other of said ring members, said vent further including a third opening open to a second axially facing face facing away from said first axially facing face.

6. The bearing assembly as in claim 2, in which said vent includes an opening open to at least one of an inner diameter surface and an outer diameter surface of at least one of said ring members.

7. The bearing assembly as in claim 2, in which said vent is a channel formed in at least one of said ring members.

8. The bearing assembly as in claim 2, in which a circumferential groove formed in at least one of said ring members forms part of said vent.

9. The bearing assembly as in claim 2, in which said rollers are spherical.

10. The bearing assembly as in claim 2, in which said rollers form a single row.

11. The bearing assembly as in claim 1, comprising:
an inner ring member;
an outer ring member encircling said inner ring member, said outer ring member and inner ring member defining the raceway therebetween;

12. The bearing assembly as in claim 11, in which said vent is formed in at least a portion of at least one of said inner ring member and outer ring member.

13. The bearing assembly as in claim 11, in which at least one of said inner ring member and said outer ring member includes a first axially facing face, and said vent includes an inlet open to said first axially facing face.

14. The bearing assembly as in claim 13, in which said vent includes an outlet open to a second axially facing face facing away from said first axially facing face.

15. The bearing assembly as in claim 13, in which said vent includes a first outlet open to at least one of an inner diameter surface of said inner ring member and an outer diameter surface of said outer ring member, said vent further including a second outlet open to a second axially facing face facing away from said first axially facing face.

16. The bearing assembly as in claim 11, in which said vent includes an outlet open to at least one of an inner diameter surface of said inner ring member and an outer diameter surface of said outer ring member.

17. The bearing assembly as in claim 11, in which said vent is a channel formed in at least one of said inner ring member and said outer ring member.

18. The bearing assembly as in claim 11, in which a circumferential groove formed in at least one of said inner ring member and said outer ring member forms part of said vent.

19. The bearing assembly as in claim 11, in which said rollers are spherical.

20. The bearing assembly as in claim 11, in which said rollers form a single row.
